# EUROPEAN PATENT APPLICATION

(11) **EP 4 697 093 A1**
(43) Date of publication of application: **18.02.2026**
(21) Application number: 24784766.8
(22) Date of filing: 23.03.2024
(51) Int. Cl.: G03B 15/00, G01N 21/84, G02B 5/00

(54) **IMAGING LENS**

(30) Priority: 02.04.2023 JP 2023059681
(71) Applicant: Machine Vision Lighting Inc., Kokubunji-shi, Tokyo, 185-0012 (JP)
(72) Inventor: MASUMURA, Shigeki, Kokubunji-shi Tokyo 185-0014 (JP)
(74) Representative: dompatent
(86) International application number: PCT/JP2024/011529
(87) International publication number: WO 2024/209975

(57) **Abstract**

When an imaging object is imaged, relative relationship of an irradiation solid angle formed by an irradiation light to an observation solid angle formed through an imaging lens is an essential parameter for optimizing precisely imaging conditions. The object is to make the optimizing imaging condition setting process effective by making the scales indicating the observation solid angle and the irradiation solid angle the same.

[Means for solving the object]

In order to know the size of the observation solid angle formed through the imaging lens at each point on the imaging object, the plane half or full angle thereof, the magnification, and in the case where the observation solid angle varies according to distance between the imaging lens and the imaging object, the varying coefficient and the value of the plane half or full angle of the observation solid angle, are indicated with scale of angle at proper portion on the imaging lens, or by a specification of the imaging lens, so that the plane half or full angle of the observation solid angle actually formed may be easily calculated.

## Description

### Technical Field

The present invention relates to an imaging lens to be used for capturing an image of an imaging object by irradiating the imaging object with light and forming an image of the imaging object by light returned from the imaging object, or by light radiated from the imaging object in case where the imaging object itself radiates the light as a light source.

### Background Art

As an example of the imaging lens, there is an imaging lens used, when light from the imaging object is imaged, in an inspection lighting system and an inspection system as shown in the Patent Document 1.

In said imaging lens, an observation solid angle for each point on the imaging object is formed, and in the light radiated from the each point on the imaging object, light radiated within the observation solid angle forms an image on respective points, on the image side, and according to the magnitude of the light energy of the image formed on the respective points on that image side, the bright and dark image can be obtained.

At this time, in an inspection lighting apparatus and an inspection system as shown in, for example, Patent document 1, an inspection lighting apparatus is used, in which shape, size or tilt of the irradiation solid angle can be set for the observation solid angle for each point on the imaging object so as to obtain desired change in the brightness of the each point on the imaging object.

However, with respect to the imaging lens used in the imaging apparatus by which light reflected by, transmitting through or scattered by the imaging object, or light radiated from the imaging object, is imaged, if shape, size or tilt of the observation solid angle formed by the imaging lens at the each point of the imaging object, is unknown explicitly, it is difficult to, on the basis of the shape, size or tilt of the observation solid angle at the each point on the imaging object, set shape, size or tilt of the irradiation solid angle at the each point of the inspection object or set the relative relationship of said irradiation solid angle with the shape, size or tilt of said observation solid angle, or the radiation solid angle from the imaging object.

More specifically, as an optical specification of the imaging lens, there is a case where a NA (numerical aperture) on an object side is indicated explicitly. The object side NA is explicitly indicated to be a value obtained, when light radiated from each point on the imaging object is captured through a medium of refractive index "n" by the aperture diameter of the imaging lens geometrically seen from the object side, by multiplying refractive index "n" by a value of a half aperture diameter divided by a distance from the each point on the imaging object to the maximum diameter of said aperture diameter. At this time, assuming that a full plane angle subtended by the aperture diameter seen from the object side of the imaging lens from each point on the imaging object is 2θ, the value of the object side NA is shown by "n" multiplied by sin θ, (n·sinθ). This value is explicitly indicated on the imaging lens or in the specification or the like of the imaging lens.

On the other hand, the irradiation solid angle for each point of the imaging object, is set by a half plane angle or a full plane angle for each point on the imaging object. In the case where the object light returned from each point of the imaging object is direct light corresponding to regular reflection light or regular transmission light, the size of the solid angle of the direct light is the same as that of the solid angle of the irradiation light, and the tilt of the direct light is equal to an angle of the irradiation solid angle relative to the normal line at each point of the imaging object and is symmetrically directed to the irradiation solid angle. The brightness thereof is determined by the reflective index or transmittance of the imaging object, and in the case where the object light is scattered light corresponding to uniform diffusion light, is determined by scattering ratio at each point on the imaging object, as well as by cosine value of the angle subtended by the normal line and the irradiation solid angle. Therefore, the surface shape of the imaging object, that is, the tilt angle of the surface in the vicinity of each point on the imaging object, is geometrically reflected by the tilt of the solid angle of the direct light radiated from each point of the imaging object. In the case where the object light is light radiated by a light source, the radiation solid angle of the radiated light is the solid angle of the direct light, and the intensity distribution of the radiated light or the shape or tilt of the radiation solid angle is quantitatively reflected as the brightness of the object light or as the tilt of the radiation solid angle.

The imaging lens captures light energy radiated from each point on the imaging object by the observation solid angle formed for each point on the imaging object, and the sequence of the points forms the bright and dark image. Therefore, the relative relationship of the light irradiated to each point on the imaging object to the irradiation solid angle, is quantitively reflected to the brightness at each point on the imaging object. However, though the object side numerical aperture NA of the imaging lens is related to the size of the observation solid angle, as described above, actual size of the observation solid angle has to be calculated from the sine value of the object side numerical aperture NA. Therefore, it is not easy to control the amount of light energy captured by the observation solid angle, in comparison with the size of the irradiation solid angle set according to the plane half angle or plane full angle of the observation solid angle, and in addition in relation to angle of tilt of the surface in the vicinity of each point on the imaging object, or to adjust and set optimum imaging conditions based on the varying aspects thereof, because of diversity of the scale.

### PRIOR ART REFERENCES

### Patent Documents

Patent Document 1: Japan Patent No. 5866573
Patent Document 2: Japan Patent No. 5866586
Patent Document 3: Japan Patent No. 6451821
Patent Document 4: Japan Patent No. 6799272

### SUMMARY OF THE INVENTION

### Problem to be solved by the Invention

The present invention has been made in view of the above-mentioned problem, and has for its object, as shown in the Patent Documents 1 to 5, in order to obtain an imaging image of the desired brightness to, when optimizing the relative relationship of the irradiation solid angle and the observation solid angle, make explicit at least the scale of the size of the observation solid angle which the imaging lens forms on each point of the imaging object in agreement with the scale of the size of the irradiation solid angle or the scale of the size of the radiation solid angle of light radiated from the imaging object, thereby conducting more effectively optimum designing as well as optimum setting of an irradiation system and an imaging system at the time of actual use.

### Means for solving the problem

The size of the observation solid angle formed by the imaging lens at each point on the imaging object, is indicated explicitly, by unit of angle as a plane half angle or as a plane full angle, in a proper portion of the imaging lens or in the specification or the like of the imaging lens.

More specifically, in the imaging lens, in case where the size of the observation solid angle formed at each point on the imaging object thereof is fixed, the value of the plane half angle or plane full angle is indicated explicitly at an appropriate portion of the imaging lens or in the specification or the like attached to the imaging lens; in the case where the observation solid angle is variable, a scale or the like is formed at an appropriate portion of the imaging lens or in the specification or the like attached to the imaging lens to indicate explicitly the plane half angle or plane full angle; and in case where the observation solid angle varies in accordance with the magnification as well as distance to the imaging object, the magnification, coefficient varying according to the distance to the imaging object, as well as value of the plane half angle or plane full angle are indicated explicitly at an appropriate portion of the imaging lens or in the specification or the like attached to the imaging lens, so that by the coefficient and the plane half angle or plane full angle as the reference, the plane half angle or plane full angle of the actually formed observation solid angle can be calculated easily.

### Advantageous effects of the Invention

According to the imaging lens of the present invention, the size and tilt of the observation solid angle formed at the each point on the imaging object, can be easily identified, and for example, in the case where the direct light corresponding to the regular reflection light or regular transmission light is returned from the imaging object, the solid angle of the direct light is the same as the irradiation solid angle of the irradiation light, and the tilt of the direct light is in the regular reflection direction or in the regular transmission direction with respect to the optical axis of the irradiation light, so the solid angle of the direct light returned from each point on the imaging object is tilted quantitatively depending on the normal line to the surface in the vicinity of each point on the imaging object. Therefore, the brightness of each point on the imaging object is determined by the inclusive relationship between the observation solid angle and the solid angle of the said direct light for each point on the imaging object, thereby it becoming possible to identify quantitatively the tilt of the surface in the vicinity of each point on the imaging object based on the brightness at each point on the imaging object.

Further, in case where the scattered light corresponding to the uniform diffusion light is returned from the imaging object, since the brightness of the scattered light varies quantitatively depending upon the angle between the normal line to the surface in the vicinity of each point on the imaging object and the irradiation solid angle, the brightness at each point on the imaging object is determined in accordance with the inclusive relationship between the observation solid angle for each point on the imaging object and the scattered light and it becomes possible to identify quantitatively the tilt of the surface in the vicinity of each point on the imaging object based on the brightness at each point on the imaging object.

Further, in the case where the radiation light is returned from the imaging object, since the brightness of that radiation light is determined in accordance with the shape as well as tilt of the radiation solid angle and radiation intensity at each point on the imaging object, the brightness at each point on the imaging object is determined by the inclusive relationship of the observation solid angle and the radiation solid angle for each point on the imaging object and by the radiation intensity, and if the radiation intensity is known, it is possible to identify quantitatively the variation in the radiation solid angle at each point on the imaging object based on the brightness at each point on the imaging object.

Here, the tilt of the observation solid angle that the imaging lens forms for each point of the imaging object is determined in accordance with the optical axis design relating to that imaging lens. For example, in case of an object side telecentric lens, the tilt of the observation solid angle formed at each point on the imaging object, is identified depending on what angle the principal optical axis of the objective side telecentric lens is set with respect to the imaging object. In case where the imaging lens is not object side telecentric, the tilt of the observation solid angle can be identified according to distance from the imaging lens to the imaging object and distance from the principal optical axis of the lens to each point on the imaging object.

The image formed in the case where the direct light is returned from the imaging object, as described, is bright-field image, and the bright and dark distribution thereof is determined according to continuous variation in brightness of each point on the imaging object. Generally, the relative relationship of the irradiation solid angle which the irradiation light forms at each point on the imaging object or of the radiation solid angle of the light radiated from the imaging object, to the observation solid angle that the imaging lens forms for each point on the imaging object, determines the inclusive relationship between the solid angle of the direct light returned from each point of the imaging object as a result and the observation solid angle.

For example, by the inspection illumination as shown in the patent documents 1 to 4, if the irradiation solid angle onto each point on the imaging object, is made same, and if the observation solid angle that the imaging lens forms for each point of the imaging object is made same with respect to tilt, size or shape, the bright and dark distribution of the image captured by the imaging lens reflects quantitatively the tilt of the surface in the vicinity of the each point on the imaging object and the surface shape of the imaging object.

Further, for example, by the inspection illumination as shown in the patent documents 1 to 4, if the irradiation solid angle onto each point on the imaging object, is same in tilt, in shape and in size, and the observation solid angle formed through the imaging lens for each point on the imaging object is also same in tilt, in shape and in size, and if the relative relationship to the observation solid angles that the imaging lens forms for respective points on the imaging object, are same, the bright and dark distribution of the images imaged by the imaging lens reflects quantitatively the tilt of the surface in the vicinity of the each point on the imaging object and in addition the contour of the surfaces of the imaging object, in the same way.

Further, even when conventional type illumination is used, the irradiation solid angle for each point on the imaging object can be identified. Therefore, if the plane half angle or plane full angle and tilt of the observation solid angle that the imaging lens forms for each point on the imaging object are explicitly indicated, it is possible to easily and intuitively design the illumination system, i.e. how the irradiation solid angle for each point on the imaging object is made, based on the geometric relationship with the aforementioned imaging object.

Further, in the case where the radiation light from the imaging object is captured, if the intensity of the radiation light can be identified, and if the plane half angle or plane full angle and tilt of the observation solid angle that the imaging lens forms for each point of the imaging object, are indicated explicitly, it is possible to conduct designing easily as to how to adjust and control the radiation solid angle emitted from each point of the imaging object, with directly using the values of the plane angles of both the solid angles, without conducting transformation of scales.

### Brief Description of the Drawings

Fig. 1 is a schematic perspective view showing a relationship between an observation solid angle that an imaging lens according to an embodiment of the present invention forms and an irradiation solid angle that a lighting optical system forms.
Fig. 2 is a schematic perspective view showing a relationship among an observation solid angle that an imaging lens according to an embodiment of the present invention forms and an irradiation solid angle that the lighting optical system forms, and a tilt of a surface of the imaging object.
Fig. 3 is a schematic perspective view showing a relationship among an observation solid angle that an imaging lens according to an embodiment of the present invention forms, a plane half angle thereof, an irradiation solid angle that the lighting optical system forms, a plane half angle thereof, and a tilt angle of a surface of the imaging object.

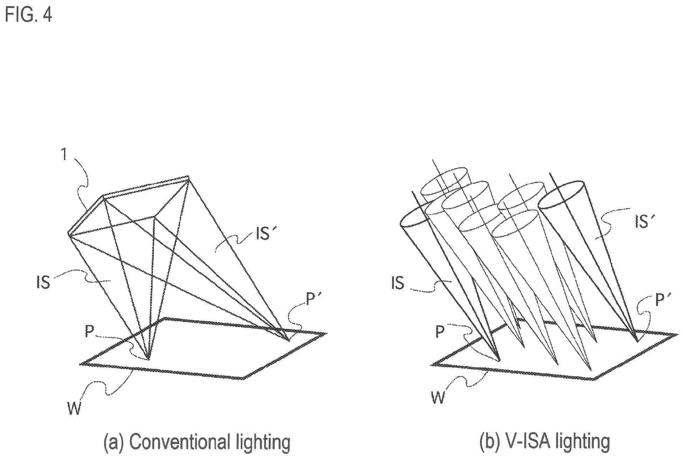

Fig. 4 is perspective views showing irradiation solid angles by the conventional lighting optical system and by the lighting optical system shown in the Patent documents 1 to 4.
Fig. 5 shows examples of scales indicating the observation solid angles on the imaging lenses with variable stop diaphragms, as an embodiment of the present invention.
Fig. 6 is a flow diagram showing the procedure for capturing an image using the imaging lens shown in Fig. 5.

### Embodiment for Carrying out the Invention

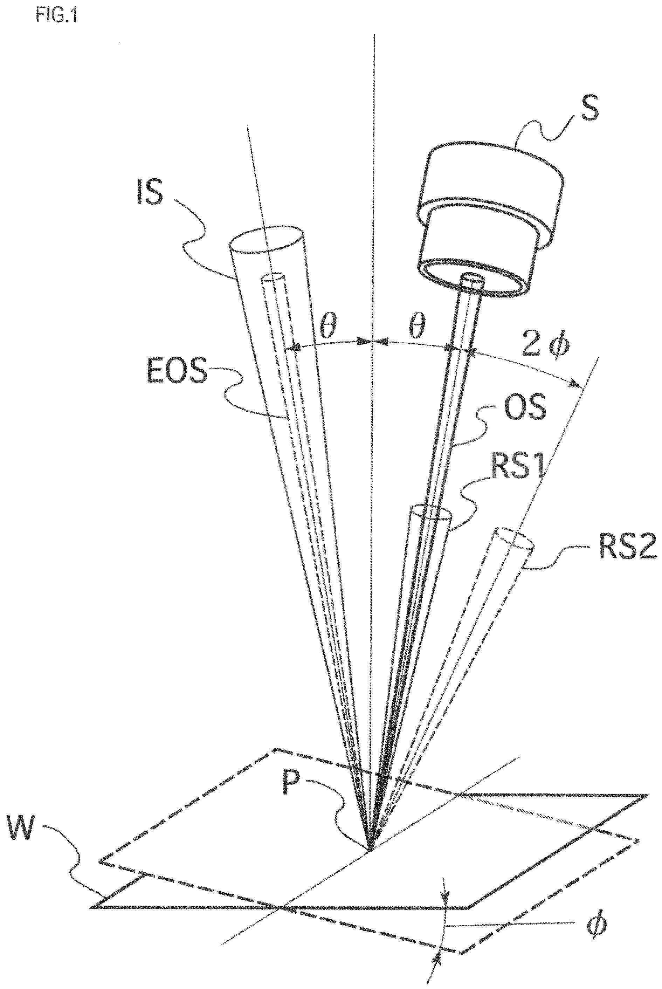

An example of the present invention will be explained below: As shown in Fig. 1, when an imaging lens S captures an object light emitted from an imaging object W irradiated with light to obtain the image of the imaging object W, the object light includes a direct light component corresponding to regular reflection light or regular transmission light and a scattered light component corresponding to uniform diffusion light. The object light emitted from each point P on the imaging object W, is captured through an observation solid angle OS that the imaging lens S forms for the each point P, and determines brightness of a point corresponding to the each point P, of the imaged object image. The sequence of the points forms the captured image of the imaging object W. The direct light component of the object light emitted from each point P on the imaging object W, in case of reflection light, is reflected, with respect to the normal line at the point P, in the symmetric direction to the irradiation solid angle IS of the illumination light and with the same solid angle RS1 as the irradiation solid angle IS. In case of transmission light, the direct light component of the object light emitted from the each point P on the imaging object W, is radiated in the point-symmetric direction with respect to the point P with an angle reduced by a tilt angle corresponding to the refractive index from the angle θ formed between the irradiation solid angle and the normal line at the point P. In the example of Fig. 1, the imaging lens is set in the direction of the regular reflection for the irradiation light. The brightness of the point P observed through the imaging lens S is determined with inclusive or overlapping relationship between the solid angle RS1 of the direct light and the observation solid angle OS and by light energy contained in the overlapping parts of them. If the irradiation solid angle and the observation solid angle are set in the direction of the regular reflection, as shown in Fig. 1, the brightness of the point P observed through the imaging lens S is determined by light energy contained in the observation solid angle OS in case where the observation solid angle OS is smaller than the solid angle RS1 of the direct light, and is determined by light energy contained in the solid angle RS1 of the direct light in case where the observation solid angle OS is not smaller than the solid angle RS1 of the direct light. If the surface in the vicinity of the point P is tilted, and the solid angle of the direct light is largely tilted like RS2, no light energy of the direct light component becomes contained in the observation solid angle OS, and the brightness is determined by only the scattered light component.

Further, regarding the scattered light component of the object light emitted from each point P on the imaging object W, since the brightness per unit solid angle of the light radiated from that each point is determined to be uniform in accordance with irradiance at the each point, the energy of the light radiated from the each point P is captured through the observation solid angle formed by the imaging lens S at the each point, and the brightness of the point P is determined by the size of that observation solid angle.

A solid angle EOS formed in the direction of the regular reflection of the observation solid angle OS formed by the imaging lens S at each point P on the imaging object W, having the same shape and the same size as the observation solid angle OS, is called to as effective irradiation solid angle. In accordance with relative relationship to the effective irradiation solid angle, it is possible to control quantitatively in which direction and to what extent of size the irradiation solid angle of the irradiation light for the imaging object W is formed, that is, as to from which direction and range the irradiation light should be irradiated or as to how the irradiated light energy is captured by the observation solid angle and contributes to the brightness of the point P. Subsequently, it is possible to control the bright and dark distribution of the captured image determined by the continuous bright and dark distribution of the points.

Referring to Fig.1, if the surface in the vicinity of the point P on the imaging object W is tilted by an angle Φ, the solid angle of the direct light component is tilted from RS1 to RS2 by an angle 2Φ, thereby changing the inclusive or overlapping relationship thereof to the observation solid angle OS.

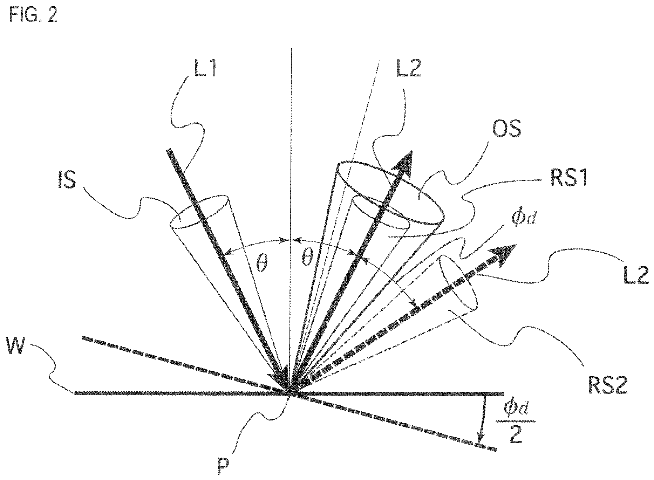

Fig. 2 focuses on the point P on the imaging object W and shows how the irradiation light path L1 and the reflection light path L2 change in relation to their respective solid angles, when the surface in the vicinity of the point P is tilted.
If the tilt of the reflection light path L2 by Φd is quantitatively reflected in the change in the brightness of the point P, it can be identified that the surface in the vicinity of the point P is tilted by 1/2 of Φd.

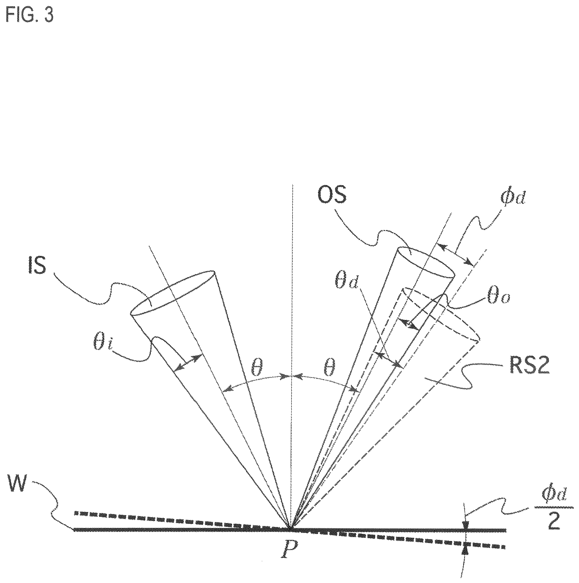

With reference to Fig. 3, when the surface in the vicinity of the point P is tilted, it is possible to identify the inclusive relationship between the observation solid angle OS and the solid angle RS2 of the direct light, by the plane half-angle θd of the solid angle RS2 of the direct light which reflects the irradiation solid angle IS and the plane half-angle θo of the observation solid angle OS, and the angle Φd formed between the optical axis of the solid angle RS2 of the direct light and the optical axis of the observation solid angle OS, in other words, it is possible to identify the angle Φd, if the plane half-angle θd of the solid angle RS2 of the direct light and the plane half-angle θo of the observation solid angle OS are known, by the brightness of the point P determined according to the inclusive relationship between the observation solid angle OS and the solid angle RS2 of the direct light. Here, since the plane half-angle θd of the solid angle RS2 of the direct light is equal to the plane half-angle θi of the irradiation solid angle IS, if the original relative relationship between the irradiation solid angle IS and the observation solid angle OS is known, it is possible to identify the tilt angle of the surface in the vicinity of each point P on the imaging object W.

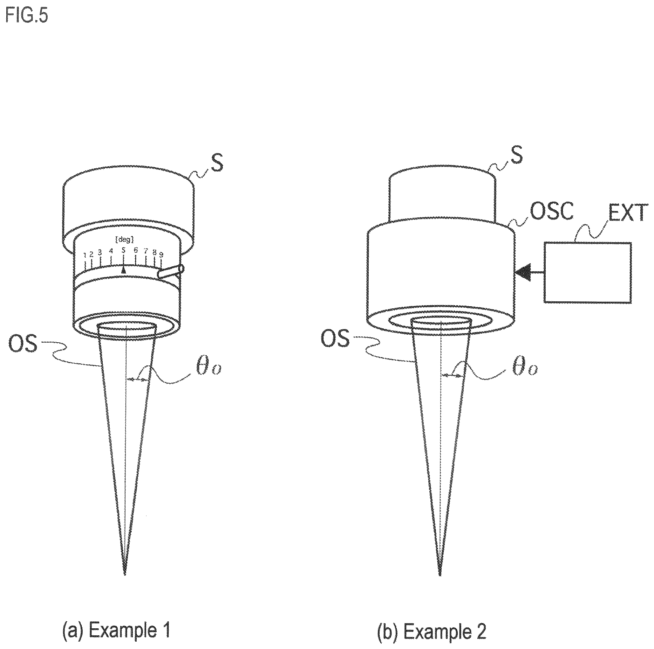

Fig.5(a) shows an example of the present invention, in which an imaging lens S is equipped with a variable stop diaphragm by which the observation solid angle OS can be varied, indicating clearly, as a scale, the plane half angle of the observation solid angle OS that the imaging lens S forms at each point on the imaging object W.

In the present invention, the variable stop diaphragm shown in Fig. 5(a) of the imaging lens is provided, as shown in Fig. 5(b), with a control means OSC for automatically adjusting and setting the observation solid angle and an external interface for controlling that control means, thereby setting not only manually but also automatically or designated externally to arbitrarily control. The imaging lens, even equipped with such a mechanism by which size as well as shape of the observation solid angle can be set automatically or by applying control signals from outside, may be controlled by directly indicating explicitly or designating the size of the plane half or full angle of the observation solid angle of the imaging lens S, or the size of the observation solid angle.

Further, in the present invention, in case where the imaging lens S is a lens of which magnification and distance to the imaging object W are variable, the observation solid angle OS formed for each point on the imaging object W, is uniquely determined by set values of them. Accordingly, conversion to the size of the observation solid angle OS is made by multiplying the set values by certain coefficient, for example. Therefore, the imaging lens may be one on which both the conversion coefficient and the size of the reference observation solid angle are clearly indicated. The same is applied also when the observation solid angle OS is automatically controlled from the outside.

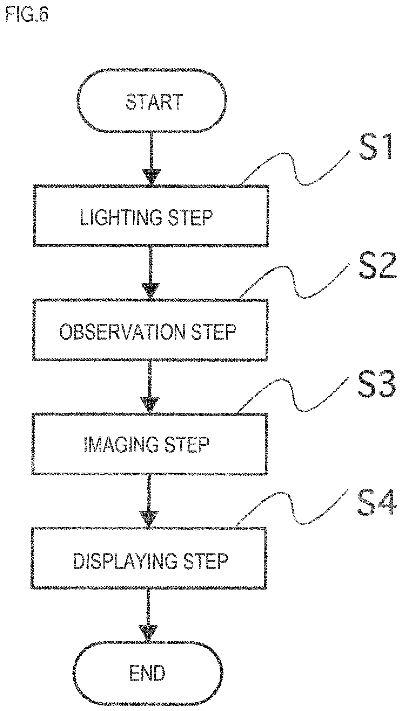

Hereinafter, procedures for capturing a desired image, using the imaging lens according to the present invention, will be described with referring to Fig. 6.

First, a lighting step (Fig. 6, step S1) is carried out. In the lighting step, an irradiation solid angle IS for each point on the imaging object W is adjusted and set for desired object light to be radiated, so that at least desired variation in the brightness and darkness of the imaging object W may be reflected as variation in the brightness and darkness of the object light radiated from each point on the imaging object W. However, in case where the imaging object W is a light source, a radiation solid angle emitted from each point on the light source is adjusted and set, and if no adjustment can be made, at least that light source is turned on to radiate light from each point on the light source.

Next, an observation step (Fig. 6, step S2) is carried out. In the observation step, the size and the shape of the observation solid angle OS for each point on the imaging object W, are adjusted and set, so that desired variation in the object light radiated from the each point may be captured by the imaging lens properly, for the object light emitted from the each point on the imaging object W in the lighting step (Fig.6, step S1). In case where no desired image can be captured, the flow returns to the lighting step (Fig.6, step S1).

Next, an imaging step (Fig.6, step S3) is carried out. In the imaging step, a bright and dark image of the imaging object W is captured by the observation solid angle OS which the imaging lens S forms at each point of the imaging object W.

Next, a displaying step (Fig.6, step S4) is carried out. In the displaying step, the bright and dark image of the imaging object W captured through the imaging lens S is displayed or recorded for the purpose of confirmation.

### List of reference signs

1: surface light source
11: light emitting surface
S: imaging lens
L1: irradiation light path
L2: reflection·transmission light path
W: imaging object
P: a point on the imaging object
P': another point on the imaging object
IS: irradiation solid angle
IS': another irradiation solid angle
OS: observation solid angle
EOS: effective irradiation solid angle
RS1: solid angle of reflection light
RS2: solid angle of reflection light
OSC: setting device for observation solid angle
EXC: observation solid angle control interface
S1: solid angle of reflection light
S2: solid angle of reflection light
S3: solid angle of reflection light
S4: solid angle of reflection light

## Claims

1. An imaging lens for capturing light emitted from an imaging object, the imaging lens being **characterized in that** the size of an observation solid angle that is a solid angle range in which the imaging lens captures light radiated from each point on the imaging object, is able to be set by unit of angle, as the size of plane half angle or plane full angle of the observation solid angle.

2. An imaging lens for capturing light emitted from an imaging object, the imaging lens being **characterized in that** the size of an observation solid angle that is a solid angle range in which the imaging lens captures light radiated from each point on the imaging object, is indicated explicitly by unit of angle, as the size of plane half angle or plane full angle of the observation solid angle.

3. An imaging lens for capturing light emitted from an imaging object, the imaging lens being **characterized in that**,
at least either one of magnification of the imaging lens and distance between the imaging lens and the imaging object is variable, and
when the size of an observation solid angle that is a solid angle range in which the imaging lens captures light radiated from each point on the imaging object, is varied in accordance with set values of at least one of them, a varying coefficient and the size that is a reference of the observation solid angle are indicated explicitly by unit of angle, as the size of plane half angle or plane full angle of the observation solid angle.
